# EUROPÄISCHE PATENTSCHRIFT

(11) **EP 2 609 322 B1**
(45) Veröffentlichungstag und Bekanntmachung des Hinweises auf die Patenterteilung: **24.11.2021**
(21) Anmeldenummer: 11733672.7
(22) Anmeldetag: 14.07.2011
(51) Int. Cl.: F02N 11/08, H02P 1/04, H02P 1/20, G05B 19/042

(54) **VERFAHREN UND VORRICHTUNG ZUM BETREIBEN EINES STARTERS EINES FAHRZEUGS**
METHOD AND DEVICE FOR OPERATING A STARTER OF A VEHICLE
PROCÉDÉ ET DISPOSITIF POUR FAIRE FONCTIONNER UN DÉMARREUR D'UN VÉHICULE

(30) Priorität: 27.08.2010 DE 102010039875
(43) Veröffentlichungstag der Anmeldung: 03.07.2013
(73) Patentinhaber: Robert Bosch GmbH, 70442 Stuttgart (DE)
(72) Erfinder: RETTIG, Rasmus, 72760 Reutlingen (DE); SCHIEMANN, Werner, 70734 Fellbach (DE)
(86) Internationale Anmeldenummer: PCT/EP2011/062027
(87) Internationale Veröffentlichungsnummer: WO 2012/025298

(56) Entgegenhaltungen:
- EP-A1- 1 041 277
- EP-A1- 1 883 154
- EP-A2- 2 128 426
- WO-A2-2011/064013
- JP-A- 5 065 861
- US-A- 2 417 710
- None

## Beschreibung

Die Erfindung betrifft ein Verfahren und eine Vorrichtung zum Betreiben eines Starters eines Fahrzeugs. Die Erfindung betrifft ferner ein Steuerprogramm.

### Stand der Technik

Es ist bekannt, elektrische Ströme, beispielsweise in einem Kraftfahrzeug oder einer Hauselektronik, durch Sicherungen zu begrenzen. Solche Sicherungen unterbrechen den Stromkreis beim Auftreten von Überströmen und müssen nach Korrektur der Ursache des Überstroms in der Regel ersetzt oder durch einen Benutzer wieder aktiviert werden.

Es gibt jedoch elektrische Verbraucher, bei denen beispielsweise beim Einschalten sehr kurze Überstromspitzen auftreten und ein permanentes Unterbrechen des Stromkreises nicht zulässig ist. Beispiele hierfür sind Glühlampen, Relais oder auch Elektromotoren. In der Folge der beschriebenen Stromspitzen bricht bedingt durch weitere Serienwiderstände, zum Beispiel in einer Batterie, die Versorgungsspannung stark ein.

Ein weiteres Beispiel für das eben beschriebene Verhalten ist ein Einbruch einer Bordnetzspannung eines Bordnetzes eines Fahrzeugs während eines Betriebs eines Starters zum Starten eines Verbrennungsmotors des Fahrzeugs. Hier treten typischerweise Ströme bis über 1000 Ampere beim Start des Starters auf, die einen Einbruch der Bordnetzspannung um mehrere Volt erzeugen können. Andere elektrische Verbraucher schalten durch diesen Einbruch während des Startvorgangs ab und müssen, sobald die Bordnetzspannung bzw. Versorgungsspannung wieder im zulässigen Bereich liegt, neu starten.

EP 2 128 426 A2 offenbart ein Verfahren zur Begrenzung eines Starterstroms.

In der Patentschrift EP 104 1277 B1 wird beispielsweise eine Versorgungsspannung eines Elektromotors mittels eines elektrischen Widerstandes während einer Startphase des Elektromotors begrenzt. Während dieser Startphase wird ein Strom in dem Elektromotor gemessen. Kurz nach dem Einschalten des Motors durchläuft der Stromverlauf ein lokales Maximum. Dieses lokale Maximum wird detektiert und nachdem der Strom in dem Motor nach dem Zeitpunkt des Auftretens des lokalen Maximums wieder unter einem vorgegebenen Wert liegt, wird der elektrische Widerstand mittels eines Transistors überbrückt, so dass der Motor mit der vollen Versorgungsspannung betrieben wird.

Nachteilig hieran ist aber insbesondere, dass eine solche Begrenzung auch bei ungünstigen Betriebsumgebungen des Motors durchgeführt wird, beispielsweise bei niedrigen Temperaturen und/oder niedrigen Versorgungsspannungen. Insofern kann es passieren, dass in solchen Situationen ein Startvorgang des Motors verzögert wird oder der Motor gar nicht erst startet.

### Offenbarung der Erfindung

Die der Erfindung zugrunde liegende Aufgabe kann daher darin gesehen werden, ein Verfahren und eine Vorrichtung zum Betreiben eines Starters eines Fahrzeugs anzugeben, welche auch unter ungünstigen Umgebungsbedingungen, beispielsweise bei einer niedrigen Temperatur und/oder einer niedrigen Versorgungsspannung, ein zuverlässiges Starten eines Motors ermöglichen.

Diese Aufgabe wird mittels der Gegenstände der unabhängigen Ansprüche gelöst. Vorteilhafte Ausgestaltungen der Erfindung sind Gegenstand von jeweils abhängigen Unteransprüchen.

Die Erfindung umfasst den Gedanken, ein Verfahren zum Betreiben eines Starters eines Fahrzeugs bereitzustellen. In einem ersten Schritt wird eine physikalische Größe gemessen. In einem zweiten darauf folgenden Schritt wird abhängig von der gemessenen physikalischen Größe eine Entscheidung darüber getroffen, ob ein Starterstrom des Starters begrenzt wird oder nicht begrenzt wird. Wenn beispielsweise die gemessene physikalische Größe kleiner oder größer bzw. kleiner gleich oder größer gleich als ein vorbestimmter Wert ist, dann wird der Starterstrom des Starters nicht begrenzt. Vorzugsweise kann auch vorgesehen sein, dass die vorgenannten Bedingungen dazu führen, dass der Starterstrom des Starters nicht begrenzt wird. Insbesondere kann auch vorgesehen sein, dass ein Starterstrom des Starters begrenzt wird bzw. nicht begrenzt wird, wenn die gemessene physikalische Größe nicht in einem vorbestimmten Bereich liegt bzw. wenn sie in einem vorbestimmten Bereich liegt.

Wenn im vorherigen Schritt bestimmt wurde, dass der Starterstrom des Starters begrenzt werden soll, so wird in diesem Fall die Begrenzung des Starterstroms nach einer vorbestimmten Zeit beendet. Hierbei kann insbesondere die vorbestimmte Zeit auf Basis der zuvor gemessenen physikalischen Größe oder den zuvor gemessenen physikalischen Größen festgelegt bzw. bestimmt werden. Die vorbestimmte Zeit kann insofern insbesondere von der gemessenen physikalischen Größe abhängig sein.

Das Verfahren bietet hierbei insbesondere den Vorteil, dass die realen Betriebsumgebungen des Fahrzeugs beim Startvorgang bzw. beim Anlassen eines Motors berücksichtigt werden. Insbesondere wenn für einen Startvorgang schlechte bzw. ungünstige Betriebsbedingungen herrschen, so wird der Starterstrom nicht begrenzt, so dass der Starter mit der vollen Versorgungsspannung betrieben werden kann. Hier ist im Stand der Technik unabhängig von den realen Betriebsumgebungen eine Begrenzung während des Startvorgangs immer aktiv.

Weiterhin bietet das Verfahren insbesondere den Vorteil, dass aufgrund der Beendigung der Begrenzung des Starterstroms nach einer vorbestimmten Zeit, wenn der Starterstrom begrenzt wird, dass nach der vorbestimmten Zeit der Starter wieder mit der vollen Versorgungsspannung betrieben werden kann, so dass ein maximales Anlassdrehmoment zum Anlassen des Motors zur Verfügung steht.

Die Erfindung umfasst weiterhin den Gedanken, eine Vorrichtung zum Betreiben eines Starters eines Fahrzeugs bereitzustellen. Erfindungsgemäß umfasst die Vorrichtung einen Begrenzer zum Begrenzen eines Starterstroms und einen Überbrücker zum elektrischen Überbrücken des Begrenzers, so dass bei einer Überbrückung der Starterstrom nicht begrenzt ist. Die Vorrichtung umfasst ferner eine Steuereinheit zum Schalten des Überbrückers in einen Überbrückungs- oder einen Nichtüberbrückungsmodus. Wenn der Überbrücker in den Überbrückungsmodus geschaltet ist, so überbrückt der Überbrücker den Begrenzer, so dass der Starterstrom nicht begrenzt ist. Wenn der Überbrücker in den Nichtüberbrückungsmodus geschaltet ist, so überbrückt der Überbrücker den Begrenzer nicht. Der Starterstrom ist insofern begrenzt. Vorzugsweise umfasst die Steuereinheit einen oder mehrere Metall-Oxid-Halbleiter-Feldeffekttransistoren (MOSFET), insbesondere Leistungs-MOSFETs und/oder einen oder mehrere Ansteuerschaltkreise, insbesondere integrierte Ansteuerschaltkreise (Ansteuer-IC ("Integrated Circuit").

Erfindungsgemäß ist die Steuereinheit weiterhin derart gebildet ist, abhängig von einer gemessenen physikalischen Größe, den Überbrücker in den Überbrückungs- oder den Nichtüberbrückungsmodus zu schalten. Ferner ist die Steuereinheit derart gebildet, den Überbrückungsmodus nach einer vorbestimmten Zeit zu beenden.

Die im Zusammenhang mit dem Verfahren beschriebenen Vorteile gelten analog auch für die Vorrichtung.

Vorzugsweise umfasst die Vorrichtung drei Anschlüsse bzw. Pins zum Anschließen der Vorrichtung in einen Starterstromkreis des Fahrzeugs. Hierbei kann beispielsweise der erste Anschluss bzw. Pin an eine elektrische Energiequelle angeschlossen werden. Insbesondere umfasst die elektrische Energiequelle eine oder mehrere Batterien und/oder einen oder mehrere Kondensatoren. Insbesondere stellt die elektrische Energiequelle eine elektrische Energie, insbesondere eine elektrische Spannung, für den Starter des Fahrzeugs bereit. Beispielsweise kann der zweite Anschluss mit einem Starterrelais oder mit dem Starter verbunden werden. Vorzugsweise ist der dritte Anschluss bzw. Pin mit Masse verbunden bzw. auf Masse gelegt. Somit ist es in vorteilhafter Weise ermöglicht, die Vorrichtung in einen bereits vorhandenen Starterstromkreis eines Fahrzeugs einzubauen. Ein kostengünstiges Nachrüsten ist somit ermöglicht. Aufgrund der drei Anschlüsse kann die Vorrichtung auch als eine Drei-Pin-Vorrichtung bezeichnet werden. Weiterhin kann aufgrund der Möglichkeit, die Vorrichtung direkt in den Starterstromkreis einzubauen, diese autark und autonom in dem Starterstromkreis betrieben werden. Insbesondere sind weitere externe Steuergeräte nicht notwendig, was in vorteilhafter Weise Kosten und Gewicht einspart. Ist eine Kommunikation mit anderen Steuergeräten im Fahrzeug erforderlich, so kann diese beispielsweise mittels eines weiteren Anschlusses erreicht werden.

Nach einer bevorzugten Ausführungsform ist die physikalische Größe eine Temperatur und/oder eine elektrische Größe. Vorzugsweise ist die elektrische Größe eine elektrische Spannung und/oder ein elektrischer Strom. Insbesondere kann es sich bei der elektrischen Spannung bzw. dem elektrischen Strom um eine Versorgungsspannung bzw. Versorgungsstrom der elektrischen Energiequelle handeln. Insbesondere handelt es sich bei der Temperatur um eine Umgebungstemperatur und/oder eine Motorraumtemperatur des Fahrzeugs. Somit wird in vorteilhafter Weise ermöglicht, dass ein Startvorgang des Starters an die entsprechenden realen Umgebungszustände des Fahrzeugs angepasst werden kann. Beträgt beispielsweise die Temperatur weniger als 0°C, so wird der Starterstrom vorzugsweise nicht begrenzt. Bei einer Temperatur oberhalb von 0°C kann beispielsweise eine Starterstrombegrenzung stattfinden, insbesondere wenn die Versorgungsspannung zwischen 7 V und 12 V liegt. Vorzugsweise wird in einem Bereich von 7 V bis 12 V der Versorgungsspannung der Starterstrom begrenzt. Weiterhin kann vorzugsweise vorgesehen sein, dass bei einer Versorgungsspannung von größer als 12 V unabhängig von der Temperatur der Starterstrom trotzdem begrenzt wird, da in diesem Fall die hohe Versorgungsspannung einen zuverlässigen Startvorgang des Starters ermöglicht. Vorzugsweise wird bei einer Versorgungsspannung von kleiner 7 V unabhängig von der Temperatur der Starterstrom nicht begrenzt. Somit kann in vorteilhafter Weise selbst bei einer geringen Versorgungsspannung ein zuverlässiges Starten des Motors ermöglicht werden.

Vorzugsweise ist ein Detektor zum Detektieren der physikalischen Größe vorgesehen. Insbesondere umfasst der Detektor einen Spannungsdetektor und/oder einen Stromdetektor. Insbesondere umfasst der Detektor einen oder mehrere Temperatursensoren. Beispielsweise kann vorgesehen sein, dass der Detektor in der Steuereinheit integriert ist. Vorzugsweise kann auch vorgesehen sein, dass der Detektor extern von der Steuereinheit angeordnet ist und insbesondere mit der Steuereinheit zum Übermitteln eines entsprechenden Detektorsignals verbunden ist. Insbesondere das Integrieren des Detektors in der Steuereinheit bietet den Vorteil eines besonders kompakten Aufbaus der Vorrichtung. Falls der Detektor extern von der Steuereinheit vorgesehen ist, so kann dieser in vorteilhafter Weise besonders leicht und kostengünstig ausgewechselt werden. Nach einer anderen beispielhaften Ausführungsform wird ein Abfall einer weiteren elektrischen Größe in einem elektrischen Starterstromkreis erfasst, wobei ein Erfassungszeitpunkt des Abfalls einem Anfangszeitpunkt der vorbestimmten Zeit entspricht. D.h. beispielsweise, dass ein Spannungsabfall an dem Begrenzer erfasst wird. Ab dem Zeitpunkt, an dem die an dem Begrenzer abfallende Spannung einen vorbestimmten Schwellwert unterschreitet, beginnt die vorbestimmte Zeit zu laufen, in welcher der Starterstrom begrenzt wird. Vorzugsweise ist hierfür ein Zeitgeber zum Erzeugen eines Zeitsignals vorgesehen. Der Zeitgeber ist insbesondere in der Steuereinheit integriert, kann aber auch beispielsweise extern von diesem angeordnet sein. Sobald also beispielsweise der Spannungsabfall an dem Begrenzer den vorgegebenen Schwellwert unterschreitet, aktiviert die Steuereinheit den Zeitgeber. Der Zeitgeber wird dann nach der vorbestimmten Zeit ein Zeitsignal an die Steuereinheit ausgeben, wodurch dieses dann den Überbrücker aus dem Überbrückungsmodus in den Nichtüberbrückungsmodus schaltet, so dass die Begrenzung des Starterstroms nach der vorbestimmten Zeit beendet wird.

Erfindungsgemäß wird der Starterstrom mittels eines Widerstandes begrenzt. Insbesondere umfasst der Begrenzer einen oder mehrere elektrische Widerstände. Vorzugsweise umfasst der Begrenzer einen variabel einstellbaren Widerstand, beispielsweise ein Potentiometer. Somit kann in vorteilhafter Weise eine Starterstrombegrenzung auf unterschiedliche Starter für verschiedene Fahrzeuge angepasst werden.

Erfindungsgemäß wird die Begrenzung des Starterstroms beendet, indem ein elektrisch parallel zu dem Widerstand geschalteter Transistor, insbesondere ein Leistungstransistor, den Widerstand überbrückt. Vorzugsweise ist der Transistor ein Feldeffekttransistor (FET) oder ein Metall-Oxid-Halbleiter-Feldeffekttransistor (MOSFET). Somit kann insbesondere in vorteilhafter Weise eine besonders schnelle Schaltung zwischen dem Überbrückungsmodus in den Nichtüberbrückungsmodus und umgekehrt erreicht werden.

Vorzugsweise wird die Vorrichtung zur Begrenzung eines elektrischen Stroms in einer oder mehrerer elektrischer Lasten verwendet. Eine elektrische Last kann beispielsweise einen Elektromotor und/oder einen Starter umfassen.

Die Erfindung umfasst weiterhin den Gedanken, ein Steuerprogramm mit Programmcode zur Ausführung des Verfahrens anzugeben, wenn das Steuerprogramm auf der Steuereinheit ausgeführt wird.

Die Erfindung wird im Folgenden anhand von bevorzugten Ausführungsbeispielen unter Bezugnahme auf Figuren näher erläutert. Hierbei zeigen:
- Fig. 1: einen zeitlichen Verlauf einer Bordnetzspannung und eines Starterstroms,
- Fig. 2: eine Vorrichtung zum Betreiben eines Starters eines Fahrzeugs,
- Fig. 3: eine Detailansicht der Vorrichtung aus Fig. 3,
- Fig. 4: eine weitere Vorrichtung zum Betreiben eines Starters eines Fahrzeugs,
- Fig. 5: einen Graphen, welcher zeigt, unter welchen Betriebsbedingungen der Starterstrom beispielsweise begrenzt werden kann,
- Fig. 6: einen zeitlichen Ablauf von mehreren elektrischen Größen und Betriebszuständen von einzelnen Komponenten der Vorrichtung aus Fig. 3,
- Fig. 7: einen zeitlichen Verlauf einer Bordnetzspannung und eines Starterstroms, wenn der Starter mittels des erfindungsgemäßen Verfahrens betrieben wird, und
- Fig. 8: ein schematisches Ablaufdiagramm eines Verfahrens zum Betreiben eines Starters eines Fahrzeugs.

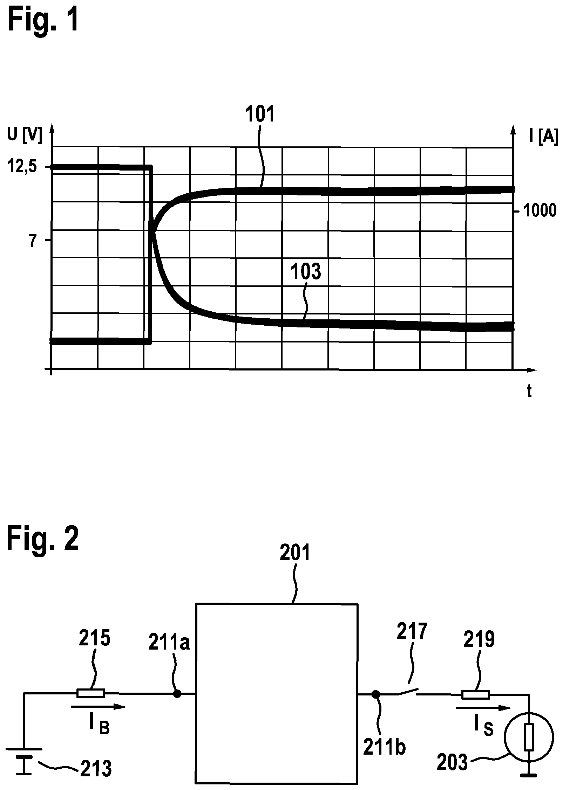

Im Folgenden werden für gleiche Merkmale gleiche Bezugszeichen verwendet. Fig. 1 zeigt einen zeitlichen Verlauf einer Bordnetzspannung und eines Starterstroms. Auf der Abszisse ist die Zeit t in willkürlichen Einheiten aufgetragen. Auf der linken Ordinate ist die Bordnetzspannung U in Volt aufgetragen. Auf der rechten Ordinate ist der Starterstrom I in Ampere aufgetragen. Der zeitliche Verlauf der Bordnetzspannung ist mit dem Bezugszeichen 101 gekennzeichnet. Der zeitliche Verlauf des Starterstroms ist mit dem Bezugszeichen 103 gekennzeichnet. Zu erkennen ist, dass der Starterstrom beim Einschalten des Starters bis auf etwa 1000 A ansteigt. Die Bordnetzspannung bricht zeitgleich von etwa 12,5 V auf etwa 7 V ein. Bedingt durch diesen Spannungseinbruch schalten insbesondere elektrische Verbraucher des Bordnetzes während des Startvorganges ab und müssen, sobald die Bordnetzspannung wieder im zulässigen Bereich liegt, neu starten.

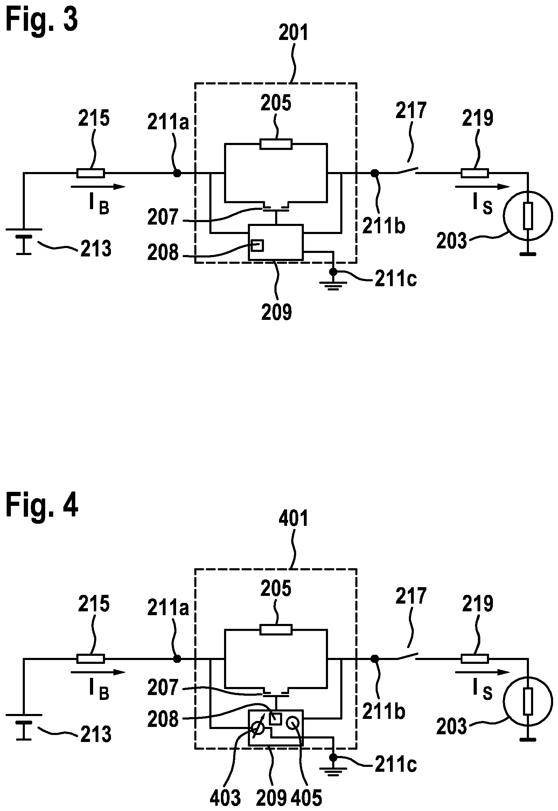

Mittels der in Fig. 2 und 3 gezeigten Vorrichtung 201 zum Betreiben eines Starters 203 eines Fahrzeugs (nicht gezeigt) ist es insbesondere ermöglicht, den in Fig. 1 gezeigten Spannungseinbruch zu begrenzen. Hierbei zeigt die Fig. 3 eine Detailansicht der Vorrichtung 201. Die Vorrichtung 201 weist einen elektrischen Widerstand 205 auf. Parallel zum Widerstand 205 ist ein Transistor 207 geschaltet. Ferner umfasst die Vorrichtung 201 eine Steuereinheit 209, welches mit dem mittels des Widerstandes 205 und des Transistors 207 gebildeten Schaltkreis elektrisch verbunden ist. Ferner weist die Vorrichtung 201 drei Anschlüsse 211a, 211b und 211c auf. Die Anschlüsse 211a, 211b und 211c können auch als Pins bezeichnet werden. Mittels des Anschlusses 211a ist die Vorrichtung 201 an eine Batterie 213 angeschlossen. Zwischen der Batterie 213 und dem Anschluss 211 ist noch ferner eine Induktivität 215 vorgesehen. Mittels des Anschlusses 211b ist die Vorrichtung 201 an den Starter 203 angeschlossen. Zwischen dem Starter 203 und dem Anschluss 211b ist noch ein Starterrelais 217 und eine weitere Induktivität 219 in Reihe geschaltet vorgesehen. Mittels des dritten Anschlusses 211c ist die Vorrichtung 201 mit Masse verbunden. Mittels der drei Anschlüsse bzw. Pins 211a, b, c ist es insbesondere in vorteilhafter Weise ermöglicht, die Vorrichtung 201 in einem bestehenden Starterstromkreis ohne großen Aufwand einzusetzen. Ein kostengünstiges Nachrüsten ist insofern ermöglicht. Aufgrund des Vorhandenseins der drei Pins 211a, b, c kann die Vorrichtung 201 auch als eine Drei-Pin-Vorrichtung bezeichnet werden.

In dem in Fig. 2 und 3 gezeigten Ausführungsbeispiel bildet der elektrische Widerstand 205 einen Begrenzer zum Begrenzen eines Starterstroms. Der Transistor 207 bildet einen Überbrücker zum elektrischen Überbrücken des Begrenzers, so dass bei einer Überbrückung der Starterstrom nicht begrenzt ist. Die Steuereinheit 209 selber kann insbesondere den Transistor 207 in einen Überbrückungsmodus oder in einen Nichtüberbrückungsmodus schalten.

Weiterhin ist in der Steuereinheit 209 ein Zeitgeber 208 zum Erzeugen eines Zeitsignals integriert. Insbesondere wenn der Starter 203 gestartet wird und eine Begrenzung des Starterstroms stattfindet, wird der Zeitgeber 208 aktiviert. Nach einer vorbestimmten Zeit erzeugt dann der Zeitgeber 208 ein Zeitsignal, auf welches die Steuereinheit 209 reagiert, indem die Steuereinheit 209 den Transistor 207 in den Überbrückungsmodus schaltet.

Wenn das Starterrelais 217 geschlossen wird, beispielsweise weil eine Startanforderung eines Nutzers vorliegt, so fließt ein mittels der Batterie 213 zur Verfügung gestellter Batteriestrom I_{B}. Wenn sich der Transistor 207 in dem Nichtüberbrückungsmodus befindet, so fließt der Batteriestrom I_{B} durch den elektrischen Widerstand 205 durch das Starterrelais 217 und der weiteren Induktivität 219 zu dem Starter 203. Nach dem Anschluss 211b kann der entsprechend fließende elektrische Strom auch als ein Starterstrom I_{S} bezeichnet werden. Wenn sich der Transistor 207 in dem Überbrückungsmodus befindet, so fließt der Batteriestrom I_{B} über den Transistor 207 zu dem Starter 203. In diesem Fall ist der Starterstrom I_{S} insofern nicht begrenzt.

Fig. 4 zeigt eine Detailansicht einer weiteren bevorzugten Ausführungsform einer Vorrichtung 401 zum Betreiben des Starters 203 des Fahrzeugs. In der Steuereinheit 209 der Vorrichtung 401 sind ferner ein Spannungsdetektor 403 und ein Temperatursensor 405 integriert. Der Spannungsdetektor 403 misst insbesondere die Batteriespannung 213. Der Temperatursensor 405 misst insbesondere eine Umgebungstemperatur und/oder eine Motorraumtemperatur des Fahrzeugs. Diese beiden gemessenen physikalischen Größen fließen insbesondere bei der Entscheidung darüber ein, ob der Starterstrom des Starters begrenzt oder nicht begrenzt wird. Abhängig von dieser Entscheidung schaltet dann die Steuereinheit 209 den Transistor 207 entsprechend in den Überbrückungsmodus bzw. in den Nichtüberbrückungsmodus.

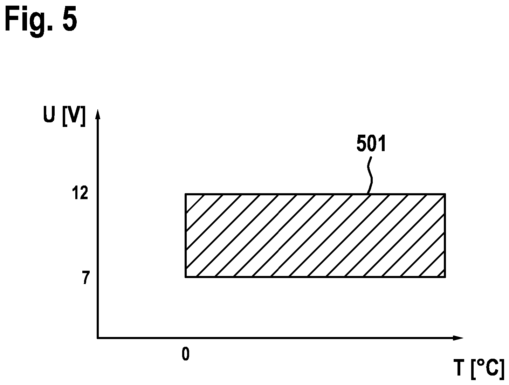

Fig. 5 zeigt einen Graphen, welcher schematisch die Bereiche kennzeichnet, in welchen beim Startvorgang der Starterstrom bereits direkt beim Starten des Starters begrenzt wird. Aufgetragen auf der Ordinate ist die Batteriespannung U beispielsweise der Batterie 213 in Volt, wobei die Batteriespannung auch als eine Versorgungsspannung bezeichnet werden kann. Auf der Abszisse ist die Umgebungstemperatur T in Celsius des Fahrzeugs aufgetragen. Wenn sowohl die Versorgungsspannung als auch die Umgebungstemperatur in dem schraffierten Bereich 501 liegen, so wird bei einem Startvorgang zunächst ein Starterstrom des Starters 203 begrenzt, wobei dann insbesondere zu einem späteren Zeitpunkt die Begrenzung aufgehoben wird. Der schraffierte Bereich 501 umfasst Umgebungstemperaturen von größer gleich 0°C und Spannungswerte zwischen 7 V und 12 V, wobei 7 V und 12 V noch zum schraffierten Bereich 501 gehören. Wenn die Versorgungsspannung und/oder die Umgebungstemperatur außerhalb des schraffierten Bereichs 501 liegen, so wird der Starterstrom I_{S} auch direkt beim Starten des Starters 205 nicht begrenzt, beispielsweise indem der Transistor 207 in den Überbrückungsmodus geschaltet wird. Der elektrische Widerstand 205 wird insofern überbrückt. Somit können in vorteilhafter Weise die realen Betriebsparameter des Fahrzeugs bei der Entscheidung bezüglich einer anfänglichen Starterstrombegrenzung berücksichtigt werden. So ist eine Versorgungsspannung von größer als 12 V ein Zeichen für eine ausreichend geladene Batterie, welche auch beim Auftreten von Stromspitzen noch eine ausreichend hohe Versorgungsspannung für elektrische Verbraucher eines Bordnetzes zur Verfügung stellen kann. Auch der Fall einer alten oder schwachen Batterie mit einer Versorgungsspannung von kleiner als 7 V wird berücksichtigt, insofern auch hier keine Starterstrombegrenzung vorgenommen wird, da ansonsten der begrenzte Strom beispielsweise nicht mehr ausreichen würde, um den Starter zuverlässig zu starten bzw. da ein Startvorgang des Starters ansonsten erheblich verlängert wäre.

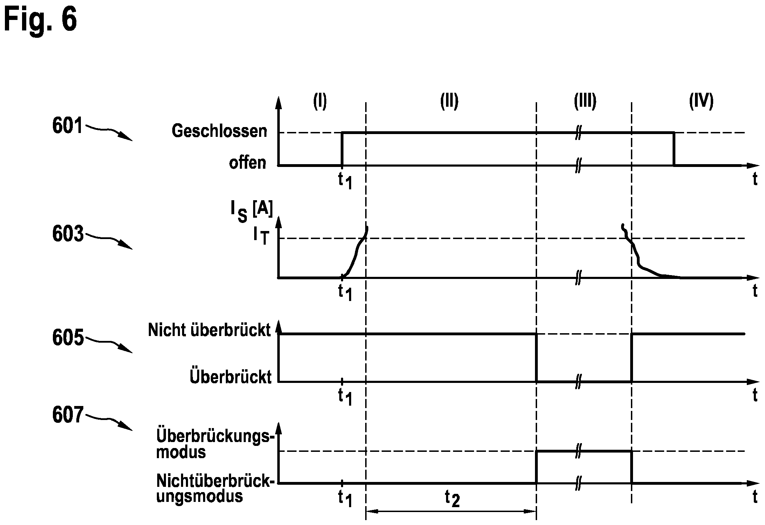

Fig. 6 zeigt den zeitlichen Verlauf von einigen physikalischen Größen und von einigen Betriebszuständen von Bauelementen des Starterstromkreises während eines Startvorgangs. Der obere Graph mit dem Bezugszeichen 601 zeigt den Zustand des Starterrelais 217 über eine Zeit t. Das Starterrelais 217 kann zwischen einem offenen und einem geschlossenen Zustand hin und her geschaltet werden.

Der Graph mit dem Bezugszeichen 603 zeigt den zeitlichen Verlauf des Starterstroms I_{S}.

Der Graph mit dem Bezugszeichen 605 zeigt an, wann der Widerstand 205 gebrückt bzw. nicht überbrückt ist.

Der Graph mit dem Bezugszeichen 607 zeigt an, wann sich der Transistor 207 in einem Nichtüberbrückungsmodus, d.h. der Transistor 207 ist offen, bzw. in einem Überbrückungsmodus, d.h. der Transistor 207 ist geschlossen, befindet.

In einer Phase I ist der Widerstand 205 nicht überbrückt. Zu einem Zeitpunkt t₁ wird das Starterrelais 217 geschlossen. Da der Widerstand 205 nicht überbrückt ist, wird der Starterstroms I_{S} begrenzt. Der Transistor 207 befindet sich insofern in dem Nichtüberbrückungsmodus.

Ein Strom in der Zuleitung erzeugt hierbei einen Spannungsabfall am elektrischen Widerstand 205. Erreicht dieser eine Schwelle I_{T}, so wird der Zeitgeber 208 aktiviert, eine Phase II beginnt. Während der Phase II, also während der Zeitdauer t_{S}, ist der Starterstrom I_{S} weiterhin begrenzt. Nach einer vorbestimmten Zeit t_{S} gibt der Zeitgeber 208 ein Zeitsignal aus, woraufhin die Steuereinheit 209 den Transistor 207 in den Überbrückungsmodus schaltet. (vgl. Phase III). Der Widerstand 205 wird also durch den Transistor 207 überbrückt. Damit wird der Starterstrom I_{S} nicht weiter begrenzt.

Beim Übergang zur Phase IV fällt der Starterstrom I_{S} wieder unter die Schwelle I_{T}. Die Steuereinheit 209 schaltet den Transistor 207 wieder zurück in den Nichtüberbrückungsmodus. Die Vorrichtung 401 fällt sozusagen zurück in ihren Ruhezustand.

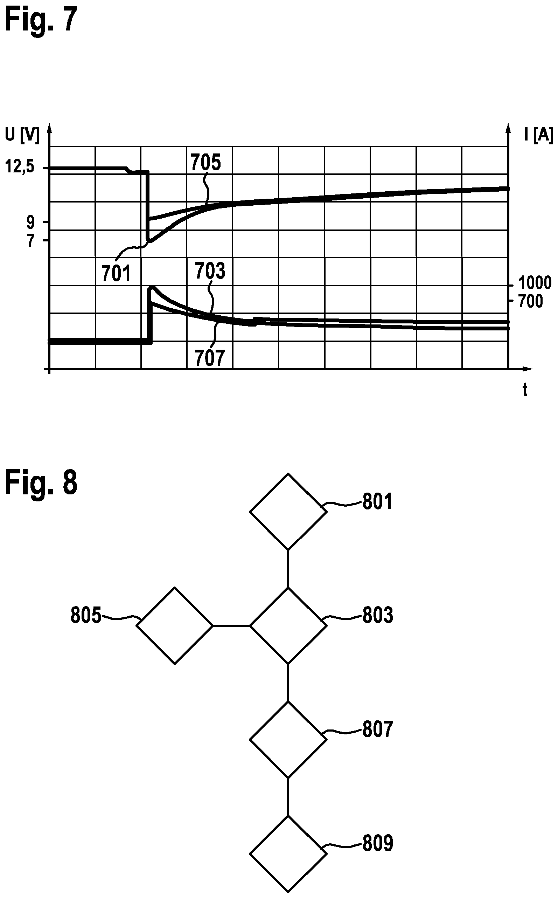

Fig. 7 zeigt einen zeitlichen Verlauf der Bordnetzspannung und des Starterstroms in einer bekannten Startvorrichtung ohne Strombegrenzung und in der Vorrichtung 201 bzw. 401. Die Abszisse zeigt die Zeit t in willkürlichen Einheiten. Auf der linken Ordinate ist die Bordnetzspannung U in V aufgetragen. Auf der rechten Ordinate ist der Starterstrom I in A aufgetragen. Die Bordnetzspannung in der bekannten Startvorrichtung ohne eine Strombegrenzung ist mit dem Bezugszeichen 701 gekennzeichnet. Der zeitliche Verlauf des entsprechenden Starterstroms ist mit dem Bezugszeichen 703 gekennzeichnet. Der zeitliche Verlauf einer Bordnetzspannung in der erfindungsgemäßen Vorrichtung 201 bzw. 401 ist mit dem Bezugszeichen 705 gekennzeichnet. Der zeitliche Verlauf des Starterstroms in der erfindungsgemäßen Vorrichtung 201 bzw. 401 ist mit dem Bezugszeichen 707 gekennzeichnet. Deutlich zu erkennen ist, dass aufgrund der erfindungsgemäßen Vorrichtung 201 bzw. 401 der Starterstrom auf etwa 700 A begrenzt wird, so dass ein Spannungseinbruch der Bordnetzspannung bei etwa 9 V begrenzt wird, anstatt wie im Stand der Technik weiter auf etwa 7 V zu fallen.

Fig. 8 zeigt ein Ablaufdiagramm einer Ausführungsform eines Verfahrens zum Betreiben eines Starters eines Fahrzeugs. In einem Schritt 801 wird eine physikalische Größe gemessen. Beispielsweise kann die physikalische Größe eine Umgebungstemperatur des Fahrzeuges sein und/oder eine Batterieversorgungsspannung. In einem Schritt 803 wird dann eine Entscheidung darüber getroffen, ob abhängig von der im Schritt 801 gemessenen physikalischen Größe ein Starterstrom des Starters begrenzt oder nicht begrenzt wird. Wenn im Schritt 803 entschieden wird, dass ein Starterstrom nicht begrenzt wird, beispielsweise indem in einem Schritt 805 die Steuereinheit 209 den Transistor 207 in den Überbrückungsmodus schaltet. Wenn im Schritt 803 entschieden wurde, dass der Starterstrom begrenzt wird, wird in einem Schritt 807 der Starterstrom begrenzt, insbesondere indem der Transistor 207 in den Nichtüberbrückungsmodus geschaltet wird. Nach Ablauf einer vorbestimmten Zeit wird dann in einem Schritt 809 die Begrenzung des Starterstroms beendet, insbesondere indem die Steuereinheit 209 den Transistor 207 in den Überbrückungsmodus schaltet, so dass der Transistor 207 den Widerstand 205 elektrisch überbrückt. Damit wird dann der Starterstrom nicht weiter begrenzt.

Die Erfindung bietet insbesondere weiterhin die folgenden Vorteile:
- Die Vorrichtung 201 bzw. 401 kann autark und autonom in einer Zuleitung einer elektrischen Last arbeiten. Es sind hierbei keine Schnittstellen zu anderen Steuergeräten erforderlich.
- Hierdurch werden insbesondere Kosten in der Herstellung minimiert.
- Auch ist es insbesondere in vorteilhafter Weise ermöglicht, die Vorrichtung in bereits vorhandenen Starterstromkreisen einzubauen.
- Insbesondere steht in Grenzbereichen, beispielsweise bei einer niedrigen Versorgungsspannung oder bei einer niedrigen Temperatur, eine volle Versorgungsspannung zum Starten des Motors des Fahrzeuges zur Verfügung.
- Neben dem Einbruch der Versorgungsspannung werden elektromagnetische Störungen, wie sie z.B. durch das Takten des Stromes in einer Zuleitung stehen können, minimiert. Hierdurch ist es weiterhin in vorteilhafter Weise ermöglicht, Maßnahmen zur Stabilisierung, beispielsweise des Bordnetzes, zu reduzieren. Pufferbatterien, Pufferkondensatoren oder nachgeschaltete DCDC-Wandler werden überflüssig. Dies führt weiterhin in vorteilhafter Weise zu Gewichts- und Kostenreduzierungen.
- Hierdurch wird insbesondere eine Lebensdauer der elektrischen Maschine, beispielsweise des Starters durch Reduktion auftretender Drehmomente beim Start erhöht.
- Die elektrische Maschine kann leichter und billiger hergestellt werden. So können beispielsweise Wandstärken reduziert werden. Hierdurch sind in vorteilhafter Weise weitere Gewichts- und Kosteneinsparungen erreichbar.
- Eine Spannungsversorgung, beispielsweise mittels der Starterbatterie im Kraftfahrzeug, wird geschont. Ihre Lebensdauer wird erhöht.
- Geräusche und Vibrationen werden verringert und insbesondere dadurch wird auch der Komfort erhöht.
- Der Startvorgang wird verbessert. So kann beispielsweise in vorteilhafter Weise die Startdauer eines durch die elektrische Maschine gestarteten Verbrennungsmotors reduziert werden.
- Die hier beschriebene Vorrichtung minimiert insbesondere Kosten, Bauraum und Gewicht.
- Sie bietet weiterhin die Möglichkeit der Realisierung einer hoch integrierten, autark am Starter arbeitenden Lösung, die als günstige Nachrüstlösung eingesetzt werden kann.
- Insbesondere durch den Aufbau mittels der Drei-Pin-Anschlüsse, wobei die Vorrichtung durch das Überschreiten einer Spannung über den integrierten Widerstand aktiviert bzw. gestartet wird, lässt sich die Ruhestromaufnahme der Vorrichtung bis auf nahezu Null realisieren, obwohl die Vorrichtung permanent versorgt ist.

Erfindungsgemäß kann die Vorrichtung auch zur Strombegrenzung bei elektrischen Lasten verwendet werden. Es wird also insbesondere erfindungsgemäß ein Verfahren und eine Vorrichtung zur Begrenzung eines Anlaufstroms einer elektrischen Last bereitgestellt, wobei im Fall eines Starters der Anlaufstrom dem Starterstrom entspricht.

## Patentansprüche

1. Verfahren zum Betreiben eines Starters (203) eines Fahrzeugs, wobei eine physikalische Größe gemessen wird, wobei abhängig von der gemessenen physikalischen Größe ein Starterstrom des Starters (203) mittels eines Widerstands (205) begrenzt wird, wobei im Fall einer Begrenzung des Starterstroms die Begrenzung nach einer vorbestimmten Zeit durch einen Zeitgeber (208) beendet wird, indem ein elektrisch parallel zu dem Widerstand (205) geschalteter Transistor (207) den Widerstand (205) überbrückt, wobei der Zeitgeber (208) aktiviert wird, wenn der Starterstrom eine Schwelle I_{T} erreicht, **dadurch gekennzeichnet, dass** nach Beendigung der Begrenzung in Abhängigkeit von einem Unterschreiten des Starterstroms I_{S} unter die Schwelle I_{T} in den Begrenzungsmodus geschaltet wird.

2. Verfahren nach Anspruch 1, wobei die physikalische Größe eine Temperatur und/oder eine elektrische Größe ist.

3. Verfahren nach Anspruch 1 oder 2, wobei ein Abfall einer weiteren elektrischen Größe in einem Starterstromkreis erfasst wird, wobei ein Erfassungszeitpunkt des Abfalls einem Anfangszeitpunkt der vorbestimmten Zeit entspricht.

4. Vorrichtung (201) zum Betreiben eines Starters (203) eines Fahrzeugs, umfassend:
- einen Begrenzer in Form eines Widerstands (205) zum Begrenzen eines Starterstroms,
- einen Überbrücker in Form eines Transistors (207) zum elektrischen Überbrücken des Begrenzers (205), so dass bei einer Überbrückung der Starterstrom nicht begrenzt ist,
- eine Steuereinheit (209) zum Schalten des Überbrückers (207) in einen Nichtüberbrückungsmodus, wobei die Steuereinheit (209) ausgebildet ist, abhängig von einer gemessenen physikalischen Größe den Überbrücker (207) in den Nichtüberbrückungsmodus zu schalten, wobei die Steuereinheit (209) ferner ausgebildet ist, den Nichtüberbrückungsmodus nach einer vorbestimmten Zeit durch einen Zeitgeber (208) zu beenden, indem der elektrisch parallel zu dem Widerstand (205) geschaltete Transistor (207) den Widerstand (205) überbrückt, wobei der Zeitgeber (208) aktiviert wird, wenn der Starterstrom eine Schwelle I_{T} erreicht, **dadurch gekennzeichnet, dass** die Steuereinheit ausgebildet ist, nach Beendigung der Begrenzung in Abhängigkeit von einem Unterschreiten des Starterstroms I_{S} unter die Schwelle I_{T} in den Nichtüberbrückungsmodus zu schalten.

5. Vorrichtung (201) nach Anspruch 4, wobei ein Detektor (403; 405) zum Detektieren der physikalischen Größe vorgesehen ist.

6. Steuerprogramm mit Programmcode zur Ausführung des Verfahrens nach einem der Ansprüche 1 bis 3, wenn das Steuerprogramm auf einer Steuereinheit (209) ausgeführt wird.

## Claims

1. Method for operating a starter (203) of a vehicle, wherein a physical variable is measured, wherein a starter current of the starter (203) is limited by means of a resistor (205) depending on the measured physical variable, wherein, in the event of the starter current being limited, the limiting is ended by a timer (208) after a predetermined time by way of a transistor (207) that is connected electrically in parallel with the resistor (205) bridging the resistor (205), wherein the timer (208) is activated when the starter current reaches a threshold I_{T}, **characterized in that**, after the limiting is ended, a switch is made to the limiting mode depending on whether the starter current I_{S} has fallen below the threshold I_{T}.

2. Method according to Claim 1, wherein the physical variable is a temperature and/or an electrical variable.

3. Method according to Claim 1 or 2, wherein a drop in a further electrical variable in a starter circuit is detected, wherein a detection time of the drop corresponds to a start time of the predetermined time.

4. Apparatus (201) for operating a starter (203) of a vehicle, comprising:
- a limiting device in the form of a resistor (205) for limiting a starter current,
- a bridging device in the form of a transistor (207) for electrically bridging the limiting device (205), so that the starter current is not limited in the case of bridging,
- a control unit (209) for switching the bridging device (207) to a non-bridging mode, wherein the control unit (209) is designed to switch the bridging device (207) to the non-bridging mode depending on a measured physical variable, wherein the control unit (209) is further designed to end the non-bridging mode using a timer (208) after a predetermined time by way of the transistor (207) that is connected electrically in parallel with the resistor (205) bridging the resistor (205), wherein the timer (208) is activated when the starter current reaches a threshold I_{T}, **characterized in that** the control unit is designed, after the limiting is ended, to switch to the non-bridging mode depending on whether the starter current I_{S} has fallen below the threshold I_{T}.

5. Apparatus (201) according to Claim 4, wherein a detector (403; 405) is provided for detecting the physical variable.

6. Control program with program code for executing the method according to one of Claims 1 to 3 when the control program is run on a control unit (209).

## Revendications

1. Procédé permettant de faire fonctionner un démarreur (203) d'un véhicule, dans lequel une grandeur physique est mesurée, dans lequel, en fonction de la grandeur physique mesurée, un courant de démarrage du démarreur (203) est limité au moyen d'une résistance (205), dans lequel, en cas de limitation du courant de démarrage, la limitation est arrêtée par un temporisateur (208) après un temps prédéterminé en ce qu'un transistor (207) connecté électriquement en parallèle à la résistance (205) ponte la résistance (205), le temporisateur (208) étant activé lorsque le courant de démarrage atteint un seuil I_{T},
**caractérisé en ce qu'**après l'arrêt de la limitation, en fonction d'un passage du courant de démarrage I_{S} sous le seuil I_{T}, on commute sur le mode limitation.

2. Procédé selon la revendication 1, dans lequel la grandeur physique est une température et/ou une grandeur électrique.

3. Procédé selon la revendication 1 ou 2, dans lequel une chute d'une autre grandeur électrique dans un circuit électrique de démarreur est détectée, un instant de détection de la chute correspondant à un instant de début du temps prédéterminé.

4. Dispositif (201) permettant de faire fonctionner un démarreur (203) d'un véhicule, comprenant :
- un limiteur sous forme de résistance (205) pour limiter un courant de démarrage,
- un dispositif de pontage sous forme de transistor (207) pour le pontage électrique du limiteur (205) de sorte que le courant de démarrage n'est pas limité lors d'un pontage,
- une unité de commande (209) pour commuter le dispositif de pontage (207) dans un mode sans pontage, l'unité de commande (209) étant réalisée pour commuter le dispositif de pontage (207) dans le mode sans pontage en fonction d'une grandeur physique mesurée, l'unité de commande (209) étant en outre réalisée pour arrêter le mode sans pontage par un temporisateur (208) après un temps prédéterminé en ce le transistor (207) connecté électriquement en parallèle à la résistance (205) ponte la résistance (205), le temporisateur (208) étant activé lorsque le courant de démarrage atteint un seuil IT,
**caractérisé en ce que** l'unité de commande est réalisée pour commuter dans le mode sans pontage après l'arrêt de la limitation, en fonction d'un passage du courant de démarrage Is sous le seuil I_{T}.

5. Dispositif (201) selon la revendication 4, dans lequel un détecteur (403 ; 405) pour détecter la grandeur physique est prévu.

6. Programme de commande comprenant du code programme pour exécuter le procédé selon l'une quelconque des revendications 1 à 3 lorsque le programme de commande est exécuté sur une unité de commande (209).
